(19) Europäisches Patentamt

European Patent Office

Office européen des brevets

(11) **EP 0 942 388 B1**

(12) **EUROPEAN PATENT SPECIFICATION**

(45) Date of publication and mention
of the grant of the patent:
**16.06.2004 Bulletin 2004/25**

(51) Int Cl.⁷: **G06K 9/00**

(21) Application number: **98301317.8**

(22) Date of filing: **20.02.1998**

(54) **Map co-ordinate extraction**

Ermittlung von Kartekoordinaten

Extraction de coordonnées de cartes

(84) Designated Contracting States:
**DE FR GB IE NL**

(43) Date of publication of application:
**15.09.1999 Bulletin 1999/37**

(73) Proprietor: **BRITISH TELECOMMUNICATIONS
public limited company
London EC1A 7AJ (GB)**

(72) Inventors:
• **Asumu, Donatus Emoedume
Ipswich Suffolk, IP5 2FP (GB)**

• **Anderson, John
Sudbury Suffolk, CO10 0RU (GB)**

(56) References cited:
**DE-A- 19 545 754**

• **MASUI T ET AL: "Recognition system for design
chart drawn on section paper" PROCEEDINGS
OF THE 5TH INTERNATIONAL CONFERENCE
ON PATTERN RECOGNITION, MIAMI BEACH,
FL, USA, 1-4 DEC. 1980, pages 127-130,
XP002072390 1980, NEW YORK, NY, USA, IEEE,
USA**

EP 0 942 388 B1

## EP 0 942 388 B1

**Description**

The present invention relates to a map co-ordinate extraction method and to a system for implementing the method.

Utility providers, planners and builders have many thousands of maps and charts detailing information relevant to themselves. Paper map collections may have been built up over many years or have been annotated with symbols relevant to the particular apparatus installed or owned by the map owner.

Importing information from such maps into a computer environment facilitates such functions as future planning to ensure maximum usage of existing facilities prior to installing new equipments. Such information may also facilitate overlaying or capturing information from a number of utilities so that cross-party damage or interference can be avoided during upgrade or installation work.

However, it is extremely manpower intensive to scan maps or charts visually to provide computer input of co-ordinates relating to plant symbols for example.

A map co-ordinate method was disclosed by Masui T et al in a conference paper entitled "Recognition System for design chart drawn on section paper"; Proceedings of the 5th International Conference on Pattern Recognition, Miami Beach, FL, USA 1-4 Dec 1980 at pages 127-130, XP002072390 1980, New York, NY, USA, published by IEEE, USA.

According to the present invention a method of extracting map co-ordinates comprising: determining for each of a plurality of known symbols at least one respective bit pixel signature; generating a computer readable image of a plan including such symbols; scanning a recognition window from a predetermined test point to determine if the bit pixel signature within said window matches one of the bit pixel signatures representing a known symbol; and storing data identifying the map co-ordinates and type of symbol for each bit pixel signature match so found characterised in that at least one symbol is determined by counting the number of pixels having a particular value in an area comprising at least two pixels in one direction and at least two pixels in another direction to provide an area pixel signature, at least one other symbol is determined by comparing the number of pixels in a line of predetermined direction within a recognition window to provide a line pixel signature in which the number of pixels of a specific colour are compared against a predetermined threshold to determine whether the symbol is present and a further symbol is determined by counting a first number of pixels having a particular value in a first area comprising at least two pixels in one direction and at least two pixels in another direction and if said first number exceeds a predetermined threshold a count is carried out of the number of pixels having a particular value in a second area related to said first area to determine a second number which is compared against a further predetermined threshold, the combination of thresholds determining presence or absence of the further symbol.

In a further improvement, when a symbol is identified an exclusion zone is created around the symbol such that subsequent testing for symbols does not impact on the designated symbol recognition window area. Pixel signatures may be along a line, within a square or rectangular area and testing may be carried out by counting pixels of a particular density within the recognition window.

Logical extrapolation from a symbol of a first kind to a symbol of a second kind expected to abut a previously found symbol may be used to confirm the presence of such symbols.

A map co-ordinate extraction method and apparatus using such method will now be described by way of example only with reference to the accompanying drawings of which:

Figure 1 shows the steps required to obtain a scanned image for recognition;
Figure 2 shows a typical chart after scanning;
Figure 3 shows an enlarged view of a part of Figure 2;
Figure 4 shows a symbol recognition window in respect of a first kind of searched symbol;
Figure 5 is a flow chart depicting the symbol recognition algorithm;
Figure 6 is a representation of located symbols and exclusion zones around the same;
Figure 7 is a flow chart of a pixel signature test program;
Figure 8a and 8b show a macro for determining a valid pixel position in comparison with previously determined symbols;
Figure 9 shows schematically a recognition window;
Figure 10 shows application of point pixel signatures for determining symbols within an image;
Figure 11 is a further example showing a line pixel signature;
Figure 12 shows a method of detecting a square block regardless of its orientation;
Figure 13 shows a pixel signature test pattern for use with a detected block;
Figure 14 is a point pixel signature in a recognition window for a particular type of symbol;
Figure 15 shows a point pixel signature for a different symbol in a recognition window; and
Figure 16 shows schematically the computer apparatus in which the system of the invention may run.

EP 0 942 388 B1

Referring to the drawings and initially to Figure 16, the system of the invention requires a processor 1 for example a personal computer capable of running complex software. Associated with the processor 1 a visual display unit 2 may be provided to allow an operator to view input data files and/or images held in data storage 3 which may be, for example, a centralised file server or storage of the PC. A man machine interface 4, which may include a keyboard or audio input device, is provided together with a scanner 5 which with its associated software is capable of producing bit map images digitised from paper representations placed on the scanner screen.

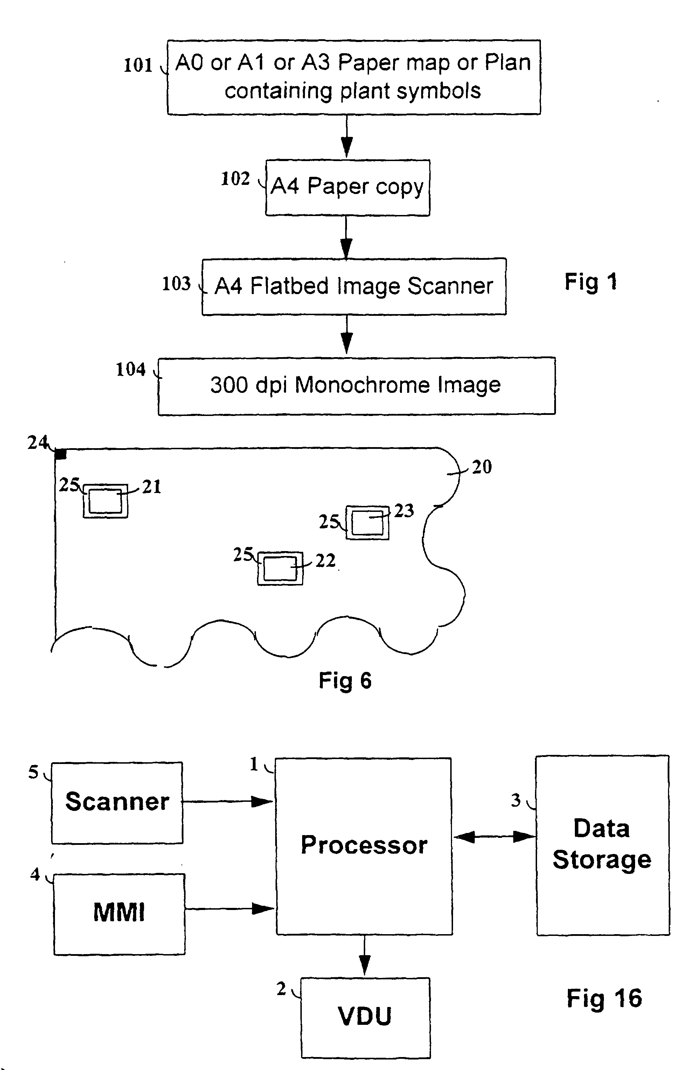

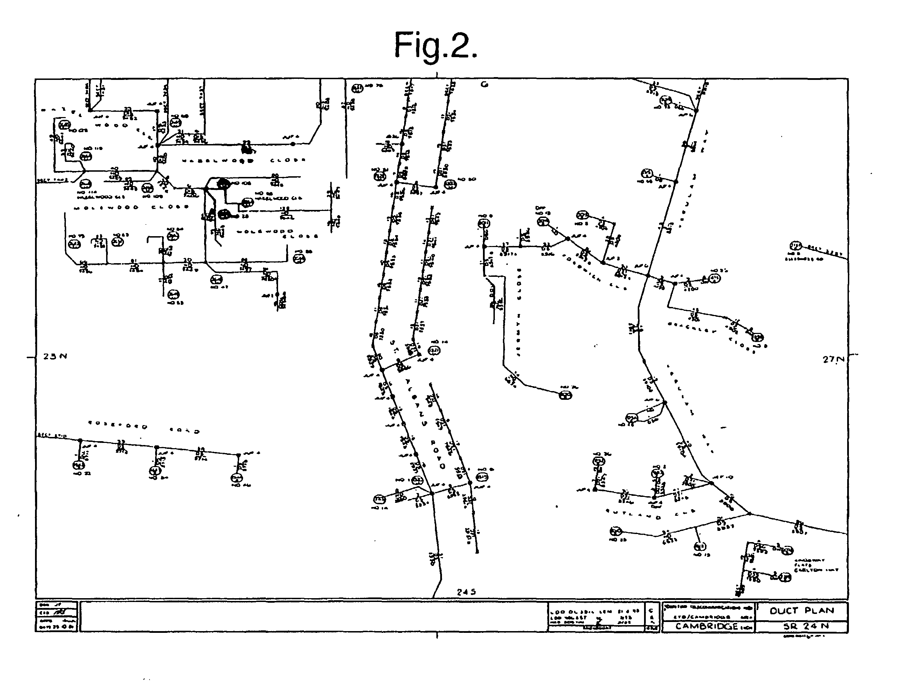

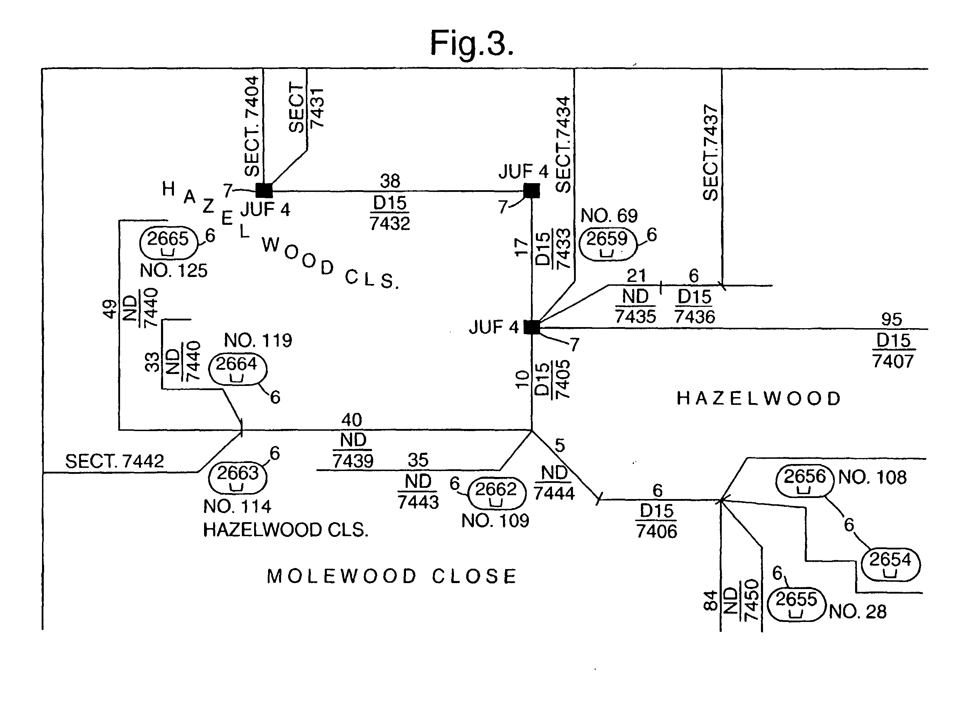

The first step in the implementation of the invention, referring now to Figure 1, is to take the large paper map or chart on which symbols have been drawn by draftsmen in the past and, if it is not of a suitable size, to use a quality photocopying technique to produce an A4 paper copy, this is indicated at step 101. At step 102 the A4 paper copy is placed on the scanner 5 of Figure 16 whence it is scanned at step 103 by the scanner 5 to produce a 300 dot per inch monochrome image for input to the processor 1 for subsequent analysis. Thus, considering Figure 2 an original paper map is reduced in size to A4 and looks substantially as shown in the Figure. The particular chart shown in Figure 2 is a duct plan from a telecommunications network operator and shows ducts as straight lines, junction points as square boxes where there is foot way access, for example, to the ducts and telegraph poles to which drop wires for customer supply may be attached in a particular form. The kind of symbols are more easily discernible from Figure 3 which is an enlarged view of a part of Figure 2. Here numbered telegraph poles 6 are clearly discernible together with junction boxes 7 and interconnecting ducts leading back via other infra structure items to a telephone exchange building (not shown).

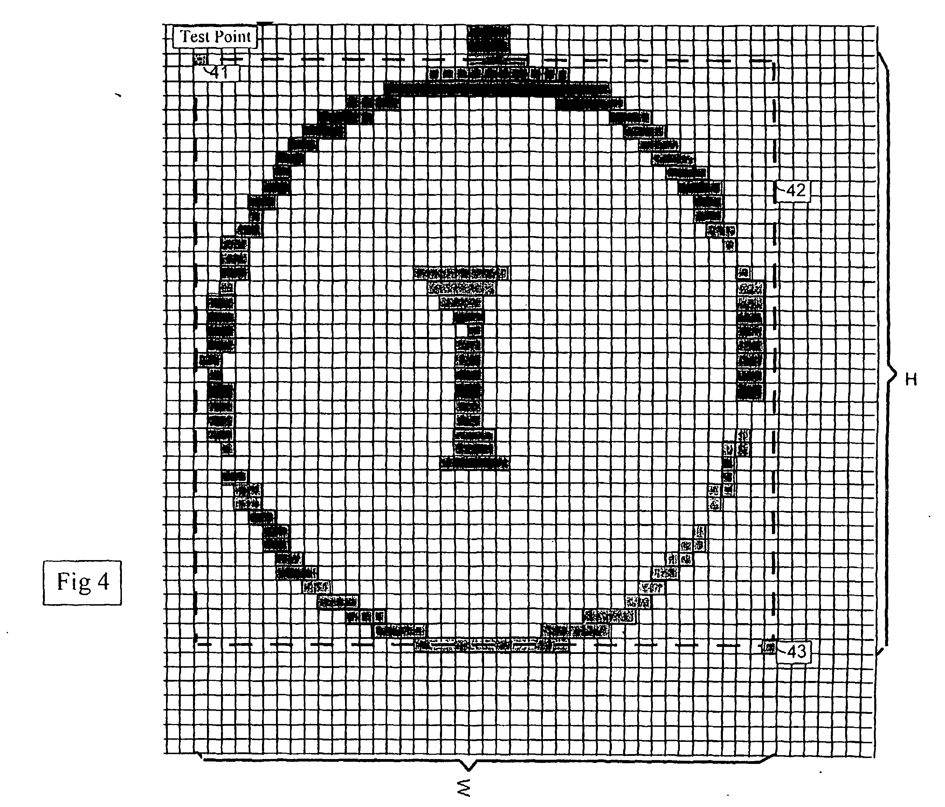

In the present invention it is desirable to recognise symbols to obtain their co-ordinates with respect to the chart or plan on which they appear. The invention provides bit pixel signatures in respect of symbols which may be expected to be found on the charts or plans. Any one particular symbol may have more than one pixel signature and the same item may be recognised by different symbols where the standard symbol may have changed during the course of the lifetime of production of the final chart. A bit pixel signature consists of a set of point, line or area descriptions which show how black and white pixels are grouped within a recognition window. A recognition window represents a square or rectangular boundary referenced from a test point and enclosing the group of pixels to be tested for the presence of a symbol. Thus referring to Figure 4 and consider the test point 41 which represents any one of the pixels within the bit map created, a recognition window for a particular symbol 42 is prescribed and for any particular searched symbol will have a specified width of W pixels and a height of H pixels, W and H being whole number values and each being at least of value 1. Having designated a test point 41 with respect to the boundary of the bit map held in store, the test point is referenced as position (1,1) movement towards the right from the test point increasing the first integer number of the position and movement down the image increasing the second number of the position. Thus the pixel 43 indicating the extreme edge of the recognition window shown in Figure 4 would have a reference position of (W,H).

As has been mentioned extraction of map co-ordinates for items to be located is carried out using point, line and area pixel signatures. Examples of each of these and their derivation in respect of particular types of symbol used in a telecommunications environment are given hereinafter. However, the symbols hereinafter described should not be considered as limiting the scope of the invention since point and/or line and/or area pixel signatures may be developed for virtually any known infrastructure symbol commonly used across charts and maps by utility operators and buildings' draftsmen.

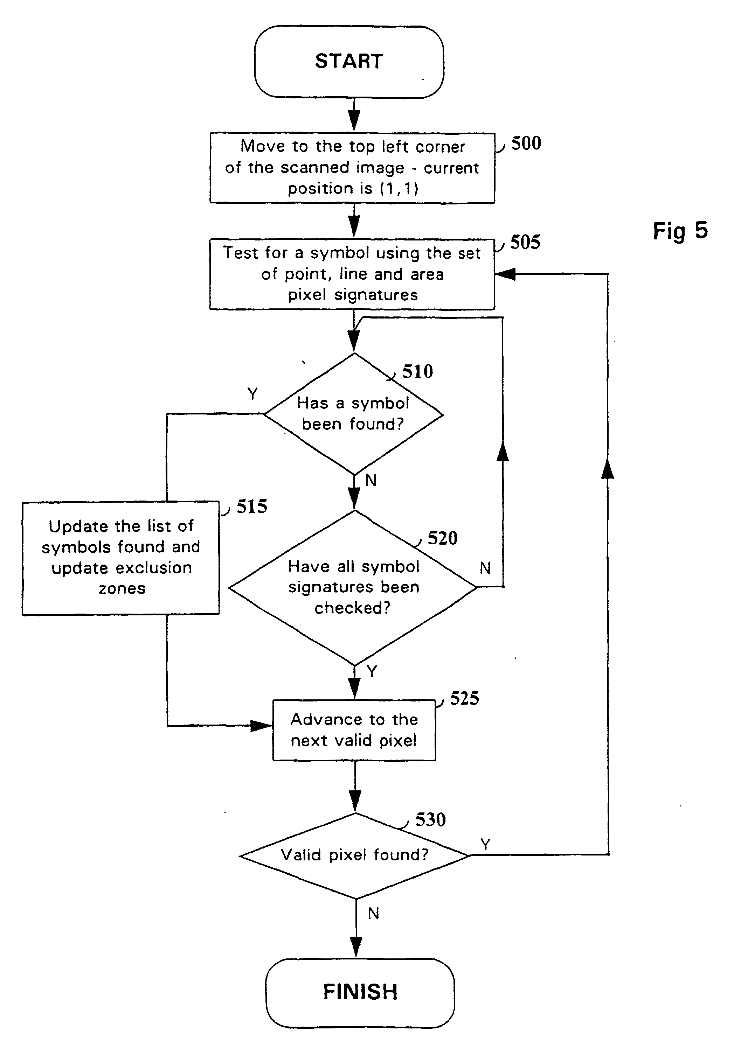

Turning now to Figure 5 once an image has been scanned into the data storage 3 of Figure 16, a recognition algorithm depicted in Figure 5 runs in the processor 1 with respect to the scanned image. Thus, the processor will commence with designating the top left hand corner pixel of the scanned image as the first test point 41 and will designate the current position as (1,1). This is depicted in Figure 5 at step 500. The algorithm now uses the appointed set of point, line and area pixel signatures, step 505, to scan in respect of each potential symbol type appropriate recognition windows from its current (1,1) position. If a pixel signature is found from the current test point, step 510, the current position of the symbol with regard to the origin of the chart is stored together with the identity of this symbol. An update of exclusion zones (hereinafter described) is carried out at step 515 and a new test point 41 is determined at step 525.

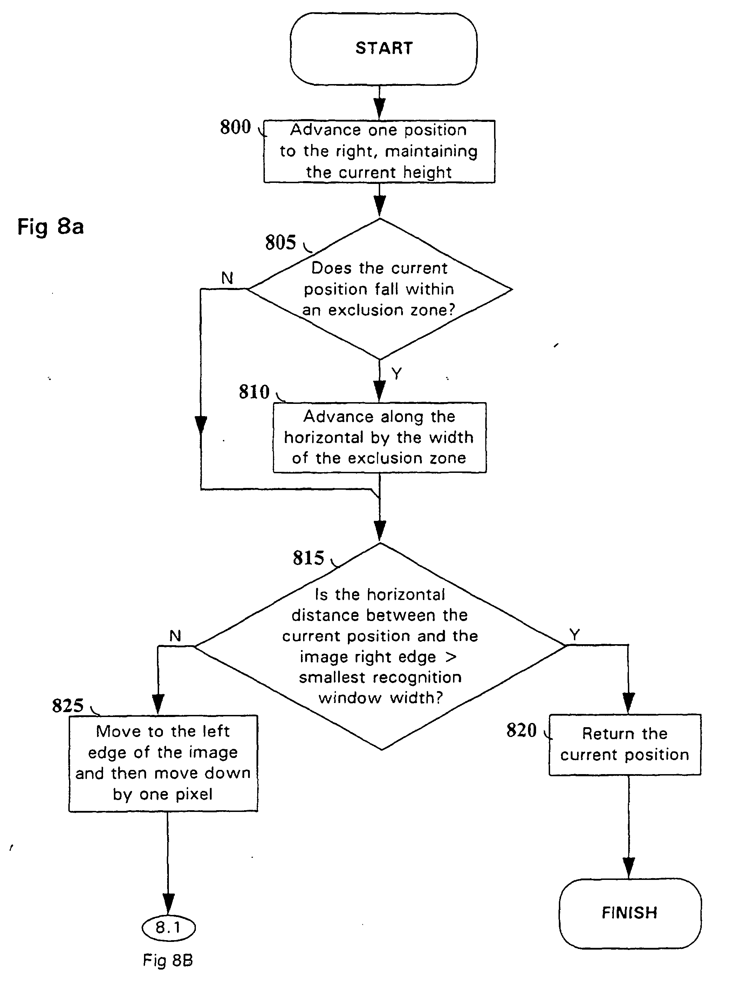

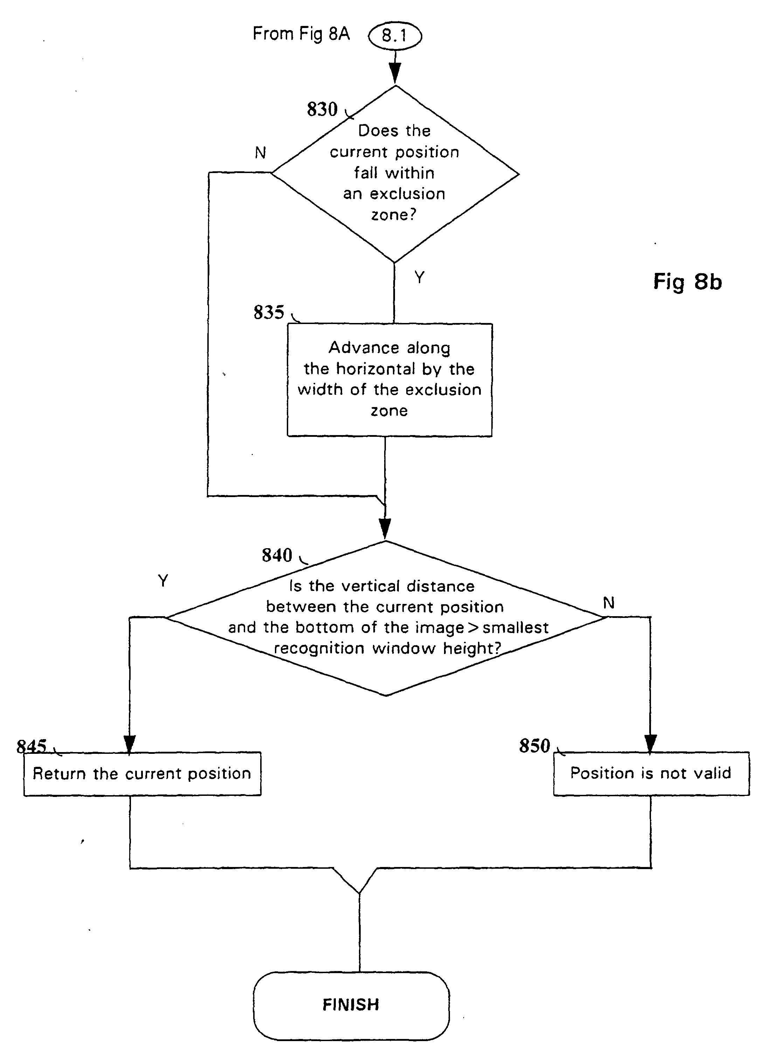

The complete set of point, line and area pixel signatures for each symbol is checked and if at step 510 a first symbol is not found then a next set of symbol signatures is applied as indicated at step 520 returning to step 510. Once all of the symbol signatures have been checked then the algorithm moves to the next valid pixel test point, the determination of which is described hereinafter with reference to Figure 8.

Provided then that a valid pixel, as indicated at step 530, can be found a new test point 41 at the new pixel position is designated as (1,1) for the purposes of defining recognition windows and the process from step 505 is applied with the new recognition window origin. This process will be repeated until at step 530 the system is unable to find a test point towards the lower right hand corner of the scanned chart which has any valid recognition window falling within the number of vertical and horizontal pixels remaining in the bit map.

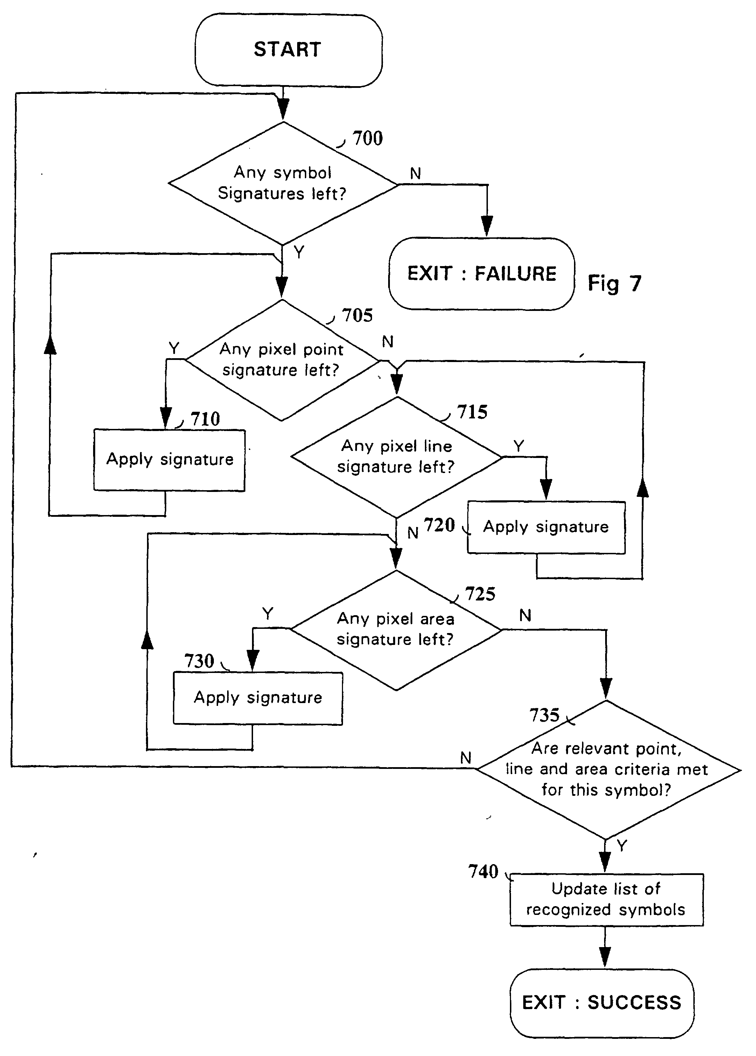

Turning briefly to Figure 6, it is preferable to define exclusion zones which surround symbols already found so that the scanning process for the whole of the chart bit map (only part of which is shown), here indicated at 20, is accelerated, thus whenever a symbol 21,22,23 is located then its location relative to the origin of the chart 24 is determined and an exclusion zone of one pixel around the recognition window of the located symbol is created, as indicated 25. Thus, as hereinafter described, when the next test point 41 is determined for symbol recognition purposes the position (1,1) cannot fall within one of the exclusion zones.

In Figure 7, to which reference is now made, testing for a symbol (step 505 of Figure 5) in shown in greater detail. Thus, the set of symbol signatures for comparison is recovered for application from the current test point 41. The pixel point signature, pixel line signature and pixel area signature for each symbol are used in this step to locate recognised symbols. Thus at step 700 a determination is made as to whether all of the symbols potentially present have been tested for from the current test point. Assuming that there are symbol signatures to be checked, then pixel point signatures in respect of a first symbol in the set are applied. If there is more than one pixel point signature possible for the particular symbol, each will be applied at step 705 until all of the particular pixel point signatures for this symbol have been tested. This is as indicated at step 710. Once all of the pixel point signatures have been applied pixel line signatures are applied at step 720 until at step 715 all possible pixel line signatures for the particular symbol have also been applied. Once the pixel line signatures have all been exhausted then at step 730 the pixel area signatures in respect of this symbol are applied until all potential pixel area signatures have been applied at step 725. The test results from the application of signatures at step 710, 720 and 730 are considered at step 735 to determine if the current test point shows the particular symbol for which a test has been carried out. Assuming, at step 735, the current test point does not have a signature recognised as the current tested symbol the system returns to step 700 and tests with the next symbol in the set until such time as all potential symbol tests from the current test point 41 have been applied. If all of the symbol signatures have been applied as indicated at step 700, then the system exits to step 525 of Figure 5 since no valid symbol has been found from the current test point. If a symbol is found as indicated at step 735 then the list of recognised symbols is updated at step 740 and the location of the symbol with regard to the origin of the chart is stored and exclusions zones are updated.

Having considered the application of symbol signatures to a particular test point 41, consideration is now given to step 525 of Figure 5, determination of the next valid pixel to be designated as test point 41 (raster position 1,1). Thus turning to Figure 8, at step 800, the current height with regard to the origin 24 is maintained and the horizontal position is moved one pixel to the right from the previous test point 41. At step 805 the co-ordinates from the origin are compared with the exclusion zones previously stored to determine whether the current vertical and horizontal position with respect to the origin 24 falls within one of the determined exclusion zones. If, at step 805, the current co-ordinates fall within an exclusion zone, then at step 810 the horizontal co-ordinate is updated by the width of the exclusion zone. A test is now applied to determine whether the distance between the current horizontal co-ordinate and the right hand edge of the scanned bit map is greater than the smallest recognition window width for any of the valid symbols for which tests are being applied. If there is a valid recognition window width (W) from the current co-ordinates with respect to the origin of the chart, then the current vertical and horizontal co-ordinates are returned as the next valid test point 41 (1,1).

If at step 815 it is found that the distance between the current horizontal co-ordinate and the right hand edge of the map is less than the smallest recognition window width, then at step 825 the horizontal co-ordinate is returned to the left hand edge of the scanned image and the vertical co-ordinate is incremented by one pixel with respect to the origin 24. The new co-ordinate is compared (step 830) with the known exclusions zones to determine whether the current vertical and horizontal co-ordinates fall within such an exclusion zone and if so at step 835 the horizontal co-ordinate is incremented by the width of the exclusion zone. In both cases at step 840 a test is now carried out to determine whether the vertical distance between the current vertical co-ordinate and the bottom of the image is greater than the smallest possible recognition window height and if so at step 845 the current position is returned as the test point 41 for further processing. If however the vertical distance is now determined as being less than the height of the smallest potential recognition window height (H) then at step 850 an invalid position is returned and the process ends for the current chart.

Having considered the recognition and co-ordinate symbol extraction algorithm, the determination of symbol pixel signatures will now be considered in greater detail. Three types of signature have been applied in the current system all based upon a monochrome symbol pixel signature, these being point, line and area pixel signatures. Best results are obtained when the draftsman has been consistent in sizing, for example by using a suitable template, such that the recognition window varies only within a few pixels for each type of symbol under consideration. If the variation in size of a particular symbol is large then a larger amount of data representing each signature variant for the symbol to be checked at the signature test stage will be required and in particular, if the variation is substantial then a number of different signatures for the same symbol may be required. Symbols of any kind may be tested for and new symbols may be added to a basic repertoire by defining for the symbol a number of pixel signatures which may be tested for.

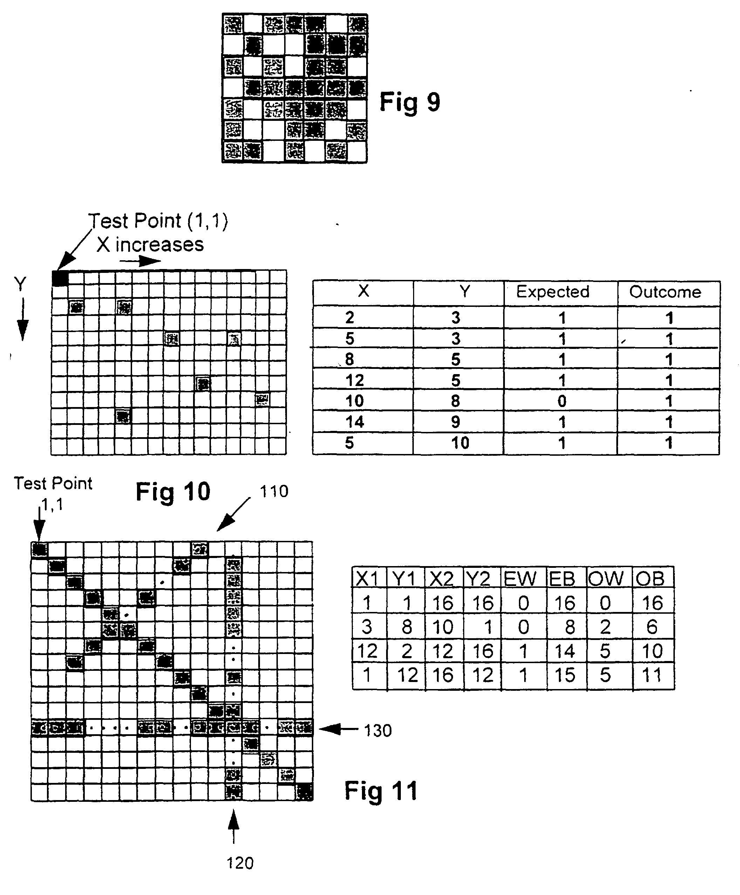

Figure 9 illustrates simply how an area pixel signature is applied. The area pixel signature simply checks the relative quantity of black and white pixels within a recognition window. Thus in Figure 9 a recognition window having a width of seven pixels and a height of seven pixels is shown. Here a simple count of the black pixels may be used with the area pixel signature identifying the expected number of black pixels within the recognition window possibly having an upper and lower range limit. In the present case, as shown in Figure 9 the outcome of a pixel count for black pixels would result in an area pixel signature of 32. If the expected area pixel signature was to be 46 then it may be assumed that the condition does not meet the area pixel signature for the symbol under consideration. If however the expected area pixel signature for the symbol was to be, say, 31 to 33 then application of the area pixel signature would come back with a positive result. Thus for the particular symbol the definitions required in respect of this signature is a window width of seven, a recognition window height of seven thus defining the symbol recognition width and height with respect to the test point (1,1) and its expected relative quantity of black and/or white pixels.

The application of a point pixel signature to facilitate the detection of a symbol enables an assumption to be drawn as to the presence or absence of a symbol within a recognition window by considering only a relatively small number of points within the recognition window. Thus, considering figure 10, although the recognition window has a width of 15 pixels and a height of 12 pixels, only seven pixels within the recognition window need be tested for a particular signature in respect of a particular symbol. Thus notwithstanding the presence of black pixels in other parts of the recognition window, a point pixel signature will consider specific points within the window based upon an offset from the test point (1,1). As the algorithm proceeds each designated point at the offset from the test point is considered as shown in the table of Figure 10. Thus, in the present case, the point pixel signature expects to see a black pixel at each of six points, namely at an offset of two in the horizontal direction and three in the vertical direction from the test point 1,1; at an offset of five horizontal in the same vertical line, at an offset of eight horizontal in the fifth line from the test point vertically and similarly at the 12th point horizontally in the fifth line vertically. A test for a white pixel at the tenth position offset horizontally in the eighth line vertically and further black pixels at the 14th raster line horizontally in the ninth line vertically offset from the test point and in the fifth offset horizontally at the tenth line vertically. The presence of other black pixels in the grid is not relevant to the calculation and, on checking the respective points of the signature, an outcome of 1 for a black pixel in a designated point and 0 for a white pixel at the designated point is used. The present point pixel signature results in a match of six out of seven positions on the signature of Figure 10. It will be appreciated that this is exemplary only and shows a much simplified signature for the purposes of showing how a signature is generated the number of points and size of recognition window may vary considerably. The determination as to what percentage of match between the expected symbol colour and the outcome represents a pass meeting the point pixel signature or not may be set and thresholded in the algorithm.

The third type of pixel signature, the line pixel signature, is constructed to recognise a symbol in the manner now be described with reference to Figure 11. A line signature to detect a symbol may be carried out by comparing lines of pixels across a recognition window from the test point 1,1 here co-ordinate pairs x1,y1 and x2,y2 determine the start and end point of the line. Across the length of the line a pixel count is carried out and the outcome of white and black pixels is compared with the expected white and black pixel count for the particular line. Note in this case it is only the count of pixels along the length of a line which is taken into account and not their position within the line. Thus in the recognition window of Figure 11, having a recognition window width of 16 pixels and a height of 16 pixels, four separate lines are being tested for to give a line pixel signature. Thus line commencing at the test point (x1,y1 = 1,1) to the diagonal opposite corner of the recognition window (x2,y2 = 16,16) has an expected white count of zero and an expected black count of 16 which the test outcome matches. A second line in the line pixel signature for the particular symbol, as shown in the direction of the arrow 110 is eight pixels long and starts with an offset of three from the test point in horizontal position and eight in the vertical position (x1,y1 = 3.8) and runs to the tenth pixel offset from the test point in the test point row (x2,y2 = 10,1) as shown in the particular Figure the outcome here is six black pixels and two white pixels against an expected outcome of eight black pixels. A third line in this particular line pixel signature 120 runs vertically with an offset of 12 pixels from the test point beginning in the second vertical row (x1,y1 = 12,2) to the bottom of the recognition window (x2,y2 =12,16) and has an expected outcome of 14 black pixels and one white pixel against an actual outcome of five white pixels to ten black pixels. Again note that the relative position of black and white pixels within the line, as in the area pixel signature count, is not relevant. Finally, a fourth line 130, running horizontally in the twelfth line offset vertically from the test point is examined (x1,y1 = 1,12) (x2,y2 = 16,12) with a respective expected outcome of one white pixel and 15 black pixels and an actual outcome of five white pixels and 11 black pixels. Again, thresholding may be used to determine the presence or absence of a specified symbol.

By using combinations of area, point and line test pixel signatures accurate determination of the presence or absence of symbols in particular positions on a chart may be made.

New types of symbols may be simply checked for by specifying a respective signature set and the thresholding criteria to be applied to the expected and outcome results.

In order to facilitate the understanding of application of signatures consideration will now be given to three types of symbol which may be found on the chart of Figure 2. These are respectively a joint box which may be in any orientation but is usually represented by a square block, and two different types of symbol used for distribution points namely a circular distribution point symbol and an elliptical distribution point symbol.

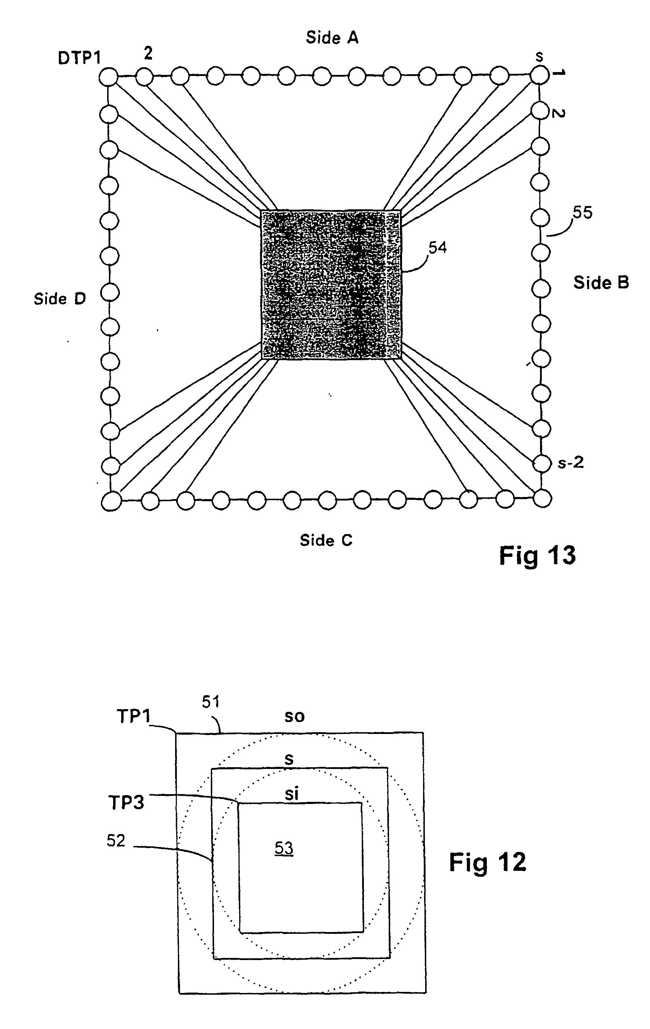

Turning now to Figure 1 2, a joint box normally appears in the drawings made by draftsmen as a square having an average of 13 pixels to each side. Thus the problem of finding a joint box in an image corresponds to finding a square block of pixels in any orientation. Thus if we consider the square 52 shown in Figure 12 having a side of length s then there exists an outer bounding square 51 which will completely enclose the square 52 when it is rotated about its centre. the side of the outer square 51 therefore has a length of s0 equal to $s\sqrt{2}$. Assuming that the inner square 52 is isolated from any other feature of a scanned map, that is to say it is surrounded by white pixels to the extent of the outer bounding square 51, then 50% of the pixels within the square 51 will be black. This figure is obtained from the ratio of the areas of both squares.

In a further consideration, regardless of the orientation of the square 52 there exists a region within it 53 which should consist entirely of black pixels. Thus, if we take a point tp1 located at the top left hand corner of the outer square 51 the point tp3 defining the top left hand corner of the inner square 53 is located at

$$x = \frac{s\sqrt{2} - \dfrac{s}{\sqrt{2}}}{2} , y = \frac{s\sqrt{2} - \dfrac{s}{\sqrt{2}}}{2}$$

i.e.

$$x = \frac{s}{2\sqrt{2}} , y = \frac{s}{2\sqrt{2}}.$$

The length of each side of the box 53 si will be

$$\frac{s}{\sqrt{2}}.$$

Thus for an isolated square applying two area signature tests with the test points located at tp1 and tp3 for 50% and 100% expected black pixel counts will detect a square. These two area signature tests form the basis of joint box detection within the method of map co-ordinate extraction of the present invention. Referring now also to Figure 13, within a scanned image a joint box will have at least one duct section terminating on it. This will increase the expected black pixel count taken at test point tp1 using the s0 recognition window to greater than 50% and therefore the criteria applied for the area test signature carried out from test point 1 will be set to a threshold of at least 50%. The second area test carried out using the smaller recognition window 53 from test point 3 has a threshold set to 97%. This value enables some noise which may result in white pixels to be tolerated in the inner part of the joint box.

Line signature tests applied to the joint box are used to determine the presence of duct sections which terminate on the box. Thus, assuming that the two area signatures indicate the presence of a joint box 54 and referring to Figure 13, an outer square twice the size of the indicated joint box 54 is determined. The test point for the line signatures is indicated at dtp1 at the corner of the outer square defined 55. The line signatures consist of two sets of lines as shown in the Figures the first set beginning on successive pixels on side a terminate on opposite pixels on side c while the second set begin on side b and terminate on opposite pixels on side d. Thus, from the test point dtp1 the position is used for the first set of pixel locations on side a are x = n, y = 1 where n varies from 1 to s, s being the maximum number of pixels in the recognition window while on the opposed side, side c, x = s - n + 1 and y = s.

Similarly, the second set of line pixel signatures are located at x = s, y = n + 1 on side b to x = 1, y = s - n on side d. Here the value of n is between 1 and s - 2.

A duct section passing through or terminating on the joint box is detected with a threshold of 94% of pixels on any of the line signatures being black pixels. Thus the detection of a duct line together with positive results from the first two area signatures above indicates the presence of a joint box at the respective location on the chart scanned.

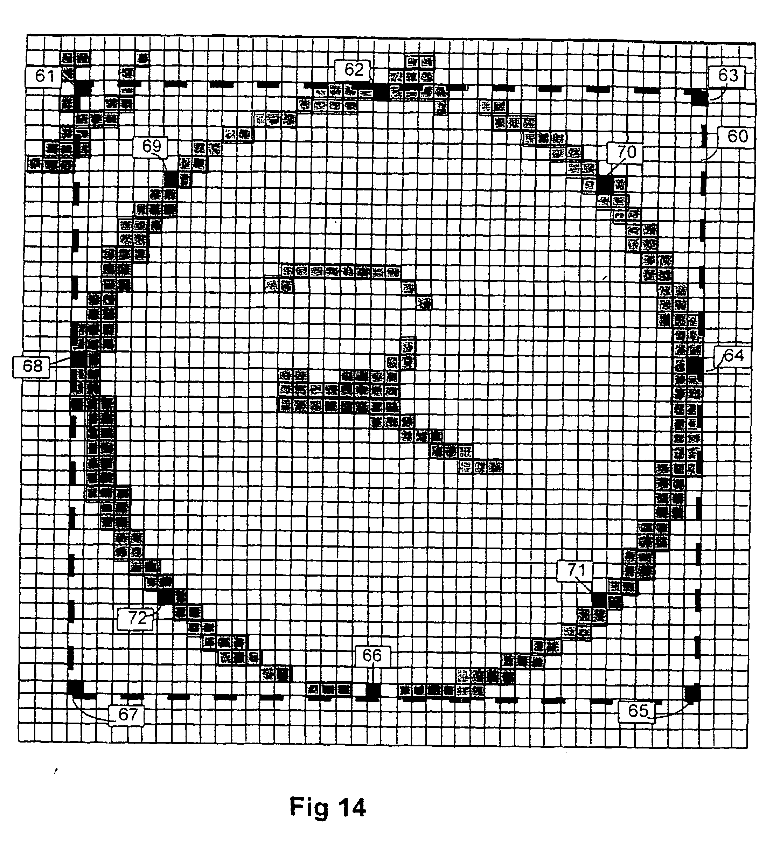

Turning now to Figure 14, in the detection of circular distribution point symbols, a typical circular distribution point will appear in the scanned image of a chart as a circle drawn using a template and in a particular reduction shown will be bounded by a recognition window averaging 41 pixels. This being the case recognition window sizes varying between 40 and 42 pixels will successfully detect the majority if not all of the circular distribution points on a map so that the co-ordinates may be extracted. Thus, 12 different point signatures are used to detect a circular distribution point using the following recognition window sizes:

| Recognition Window Size | Width in Pixels | Height in Pixels |
|---|---|---|
| 1 | 40 | 40 |
| 2 | 40 | 41 |
| 3 | 40 | 42 |
| 4 | 41 | 40 |
| 5 | 41 | 41 |
| 6 | 41 | 42 |
| 7 | 42 | 40 |
| 8 | 42 | 41 |
| 9 | 42 | 42 |

Referring to Figure 14 a recognition window 60 having a height of 41 pixels and a width of 42 pixels is shown, together with a typical circular distribution'point symbol. Note that because the symbol is essentially circular no variation in orientation with respect to the chart needs to be taken into account. A point pixel signature having 12 points only within the recognition window 60 is used. These points 61 to 72 in the particular pixel signature are as follows and as shown in the drawing have values indicated:

| Point Number | X | Y | Expected Value | Outcome Value |
|---|---|---|---|---|
| 61 | 1 | 1 | 0 | 1 |
| 62 | 21 | 1 | 1 | 1 |
| 63 | 42 | 1 | 0 | 0 |
| 64 | 42 | 19 | 1 | 1 |
| 65 | 42 | 41 | 0 | 0 |
| 66 | 21 | 41 | 1 | 1 |
| 67 | 1 | 41 | 0 | 0 |
| 68 | 1 | 19 | 1 | 1 |
| 69 | 7 | 7 | 1 | 1 |
| 70 | 36 | 7 | 1 | 1 |
| 71 | 36 | 35 | 1 | 1 |
| 72 | 7 | 35 | 1 | 1 |

Thus by setting a recognition window from a test point (1,1) and examining the twelve pixels listed i.e. the pixel at the test point which is expected to be clear but in the present case is black, pixel 62 which is offset 21 pixels to the right of the test point 61 which is expected to be black, and pixel 63 in the right hand corner of the recognition window which is also expected to be white. Thus as shown in the table pixel values which are black are being indicated by a 1 and those which are white indicated by a 0. The pixel point signature outcome is thresholded as follows: if any three of the corner pixels 61, 63, 65, 67 are white with any three of the centre point pixels 62, 64, 66, 68 being black and any three of the mid-point pixels 69, 70, 71, 72 being black then the point signature is positive, the distribution point recognised and its map co-ordinates with respect to the origin of the scanned chart can be determined and stored.

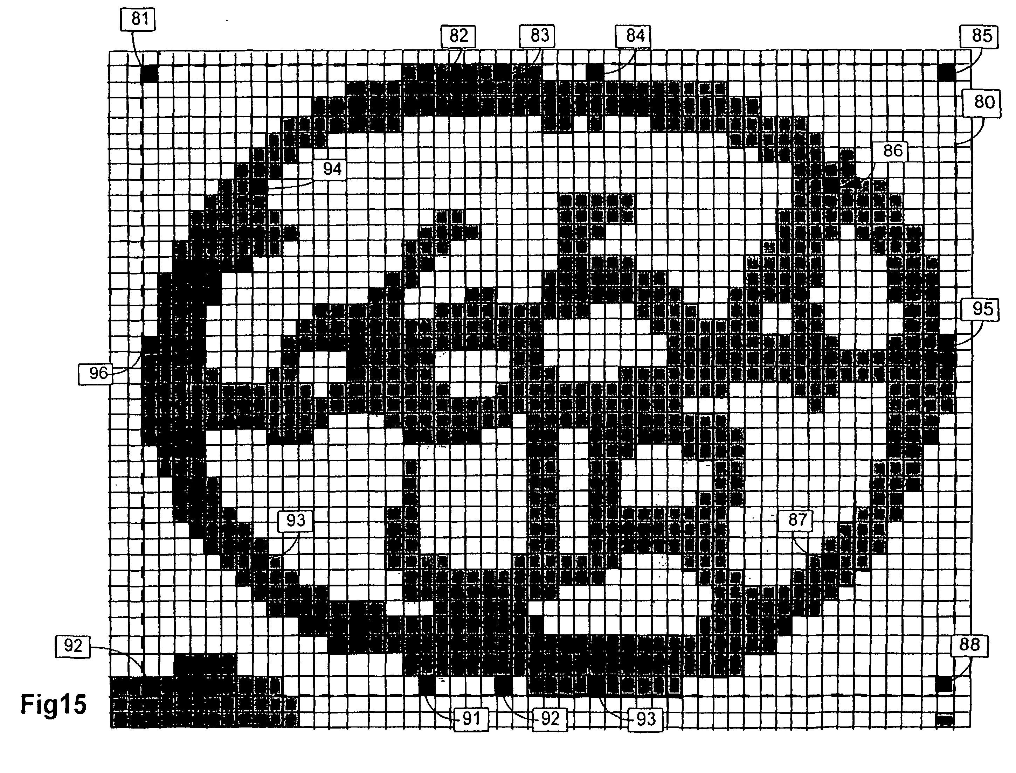

Note that the point pixel signature does not take into account any information in the centre of the distribution point such as numbering which is apparent from the distribution points 6 shown in Figure 3 which are in fact elliptical distribution point symbols the detection of which will now be described with reference to Figure 15 which shows a respective pixel signature for elliptical distribution point symbols.

It is noted that a characteristic of the plans drawn for the assignee of the current application using an elliptical distribution point symbol are invariably characterised by having their top and bottom (straight) sides parallel with the top edge of the plan. This facilitates detection of the distribution points but it will be appreciated that point pixel signatures oriented away from point pixel signatures could be developed away from the parallel as indicated with respect to the

**EP 0 942 388 B1**

description hereinbefore of joint box detection. Here again a number of width and height recognition windows about an average are used with respective signatures for each. It has been noted that the template variation for hand drawn symbols of this kind varies in width only about the two values 49 and 50 pixels whilst two variations of height are noted because of different template usage. The first being a height of between 38 and 40 (average 39) pixels or the second lies on an average of 32 pixels being between 31 and 33 pixels. Thus, 12 possible recognition window sizes are used namely:

| Window | Width | Height |
|--------|-------|--------|
| 1 | 49 | 38 |
| 2 | 49 | 39 |
| 3 | 49 | 40 |
| 4 | 49 | 31 |
| 5 | 49 | 32 |
| 6 | 49 | 33 |
| 7 | 50 | 38 |
| 8 | 50 | 39 |
| 9 | 50 | 40 |
| 10 | 50 | 31 |
| 11 | 50 | 32 |
| 12 | 50 | 33 |

A set of point pixel signatures for each recognition window size is used for the electrical distribution point symbol and Figure 15 illustrates a typical example of a 50 x 39 recognition window (window type 8) having a 16 point signature with four criteria level or thresholds applied by the algorithm. Thus within the recognition window 80 having a test point 81 (1,1) the test point as follows:

| Point No | x | y | Expected Value | Outcome Value |
|----------|---|---|----------------|---------------|
| 81 | 1 | 1 | 0 | 0 |
| 82 | 18 | 1 | 1 | 1 |
| 83 | 23 | 1 | 1 | 1 |
| 84 | 29 | 1 | 1 | 0 |
| 85 | 50 | 1 | 0 | 0 |
| 86 | 43 | 8 | 1 | 1 |
| 87 | 43 | 32 | 1 | 1 |
| 88 | 50 | 39 | 0 | 0 |
| 89 | 29 | 39 | 1 | 1 |
| 90 | 23 | 39 | 1 | 0 |
| 91 | 18 | 39 | 1 | 0 |
| 92 | 1 | 39 | 0 | 1 |
| 93 | 8 | 32 | 1 | 1 |
| 94 | 8 | 8 | 1 | 1 |
| 95 | 50 | 18 | 1 | 0 |
| 96 | 1 | 18 | 1 | 0 |

The criteria applied here are if any three of the corner points 81, 85, 88, 92 are white and at least two of 82,

8

83 and 84 are black (indicating the side of the ellipse) and at least two of 89, 90 and 91 are black and at least five of the mid and right hand points 86, 87, 93, 94, 95 and 96 are black then an elliptical distribution point is recognised.

In the recognition window shown at Figure 15 it will be noted that 89, 90 and 91 give an outcome of only one black and the final criteria requiring five out of six black is not met as a result of 95 and 96 being white. However, other windows for example a 49 x 38 window starting from the same test point 81 would result in the criteria being met since, even using a virtually identical point pixel signature shifted at its right hand edge by one pixel (i.e. points 85, 95, and 88) having an x value of 49 would result in pixel 95 being detected as black meeting the five out of six criteria for pixels 86, 87, 93, 94, 95 and 96. Further, shifting the bottom of the recognition window up by one pixel such that pixels 88 to 92 have a y co-ordinate of 38 would result in pixels 89 to 91 all giving an outcome of black thus meeting the other criteria. Thus by applying the 12 potential point pixel signatures varying in height and width appropriately recognition of an elliptical distribution point symbol on maps and charts may be carried out. Note that the numbers imposed upon the distribution points in the charts again have no effect on the detection.

By using the system it is possible to determine map co-ordinates for the various items of equipment which may be present on a chart thus enabling new maps and charts to be electronically created. As the co-ordinates for charts may be converted to co-ordinates of an ordinance survey system, for example, different maps and charts from various utilities may be simply combined to provide an overall infrastructure view. Additionally, once existing plans, charts and maps have been digitised it is possible for electronic transfer of the maps between centres to occur and further for planners to determine what infrastructure exists possibly avoiding provision of additional infrastructure which may prove unnecessary.

As has been indicated previously confirmation of the validity of a symbol may be obtained by applying additional criteria such as the presence of a connecting duct to a square box representing a junction point. Confirmation of the existence of other symbols may be possible and the elimination of noise or non-required features may be carried out by, for example, tracing ducts represented by lines between points on a map.

If required alphanumeric character recognition could be used to transfer alphanumeric data from existing charts to the digital representation of the chart stored in the data store.

### Claims

1. A method of extracting map co-ordinates comprising:

   determining for each of a plurality of known symbols at least one respective bit pixel signature;
   generating a computer readable image of a plan including such symbols;
   scanning a recognition window from a predetermined test point to determine if the bit pixel signature within said window matches one of the bit pixel signatures representing a known symbol; and
   storing data identifying the map co-ordinates and type of symbol for each bit pixel signature match so found **characterised in that** at least one symbol is determined by counting the number of pixels having a particular value in an area comprising at least two pixels in one direction and at least two pixels in another direction to provide an area pixel signature, at least one other symbol is determined by comparing the number of pixels in a line of predetermined direction within a recognition window to provide a line pixel signature in which the number of pixels of a specific colour are compared against a predetermined threshold to determine whether the symbol is present and a further symbol is determined by counting a first number of pixels having a particular value in a first area comprising at least two pixels in one direction and at least two pixels in another direction and if said first number exceeds a predetermined threshold a count is carried out of the number of pixels having a particular value in a second area related to said first area to determine a second number which is compared against a further predetermined threshold, the combination of thresholds determining presence or absence of the further symbol.

2. A method of extracting map co-ordinates as claimed in claim 1, further **characterised in that** each of line pixel signatures, area pixel signatures and bit pixel signatures are used to determine presence or absence of symbols and at least one symbol is determined by using a combination of at least two different types of pixel signature.

3. A method of extracting map co-ordinates as claimed in claim 1 or claim 2 further **characterised in that** the predetermined test point is initially set to a pixel defining a first corner of the computer readable image and, after scanning a recognition window based on the initial setting, co-ordinates of the test point are moved by a single pixel in one direction, a validity check is carried on said test point and, if said test point is at a valid pixel, scanning is carried out from the new test point.

4. A method of extracting map co-ordinates as claimed in claim 3 further **characterised in that** each time a symbol is identified co-ordinates defining an exclusion zone are stored, said exclusion zone representing a pre-determined area occupied by the symbol and in which no other symbol may reside, each such exclusion zone representing an area in which a test point will not serve to locate a further symbol.

5. A method of extracting map co-ordinates as claimed in claim 4 further **characterised in that** on incrementing the co-ordinates of the predetermined test point, if the new test point is found to reside in an excluded area, the test point is updated by the length of the exclusion zone in the direction of incrementation.

6. A method of extracting map co-ordinates as claimed in claim 3, claim 4 or claim 5 further **characterised in that** after each update of the test point co-ordinates a determination is made of the number of pixels remaining between the current test point and an edge of the plan in the direction of incrementation and, if the number of pixels remaining is less than the smallest dimension of recognition window remaining **in that** direction the test point is determined as invalid.

7. A method of extracting map co-ordinates as claimed in claim 6 further **characterised in that** on determining that the test point is invalid by reason of the recognition window size, the first co-ordinate of the test point is reset to define the initial starting edge of the plan and the other co-ordinate is updated by one pixel in the direction at right angles to the first direction of advance.

8. A method of extracting map co-ordinates as claimed in claim 7 further **characterised in that** after incrementing the test point co-ordinates a count is made of the number of pixels remaining between the last updated co-ordinate and an edge of the plan in the direction of incrementation and the number of pixels remaining is compared with the smallest recognition window **in that** direction to determine whether a symbol could lie on the plan in the remaining space.

9. A method of extracting map co-ordinates as claimed in claim 8 further **characterised in that** on determining that no further symbols can lie in the area remaining in the plan, the process of extracting map co-ordinates or symbols is determined as complete.

10. A method of extracting map co-ordinates as claimed in any preceding claim further **characterised in that** a bit pixel signature comprises co-ordinates offset from the test point in x and y directions, a predetermined number of such pixels at predetermined co-ordinates being examined and the colour of said selected pixels being compared with an expected colour for such pixels, thresholding of the number of pixels found to match in expected colour and position with a predetermined value determining the presence or absence of a symbol.

11. A method of extracting map co-ordinates as claimed in claim 10 further **characterised in that** the pixels present in a pixel signature are grouped in to a plurality of sets, each set having a respective threshold for comparison, the symbol being detected if each or a predetermined number of thresholds is exceeded.

12. Apparatus for extracting map co-ordinates comprising means (5) to scan an image, processing means (1) to examine the scanned image and storage means (3) for storing extracted co-ordinates, the processing means using the method of any one of claims 1 to 11.

**Patentansprüche**

1. Gewinnen von Kartenkoordinaten mit folgenden Schritten:

Bestimmen von mindestens einer jeweiligen Bitpixelsignatur für jedes einer Mehrzahl bekannter Symbole;
Erzeugen eines maschinenlesbaren Bildes einer Karte einschließlich dieser Symbole;
Abtasten eines Erkennungsfensters von einem vorbestimmten Meßpunkt aus, um zu bestimmen, ob die Bitpixelsignatur in diesem Fenster mit einer der Bitpixelsignaturen übereinstimmt, die ein bekanntes Symbol darstellen; und
Speichern von Daten, die die Kartenkoordinaten und Symbolart für jede auf diese Weise gefundene Bitpixelsignaturübereinstimmung identifizieren, **dadurch gekennzeichnet, daß** mindestens ein Symbol durch Zählen der Anzahl von Pixel mit einem bestimmten Wert in einem Bereich mit mindestens zwei Pixeln in einer Richtung und mindestens zwei Pixeln in einer anderen Richtung bestimmt wird, um eine Bereichspixelsignatur bereitzustellen, mindestens ein weiteres Symbol durch Vergleichen der Anzahl von Pixel in einer Linie mit vorbestimmter Richtung in einem Erkennungsfenster bestimmt wird, um eine Linienpixelsignatur bereitzustellen, bei der die Anzahl von Pixel einer bestimmten Farbe mit einem vorbestimmten Schwellwert verglichen wird, um zu bestimmen, ob das Symbol vorhanden ist, und ein weiteres Symbol durch Zählen einer ersten Anzahl von Pixel mit einem bestimmten Wert in einem ersten Bereich mit mindestens zwei Pixeln in einer Richtung und mindestens zwei Pixeln in einer weiteren Richtung bestimmt wird, und wenn die erste Anzahl einen vorbestimmten Schwellwert überschreitet, eine Zählung der Anzahl von Pixeln mit einem bestimmten Wert in einem zweiten Bereich aufgeführt wird, der mit dem ersten Bereich in Beziehung steht, um eine zweite Anzahl zu bestimmen, die mit einem weiteren vorbestimmten Schwellwert verglichen wird, wobei die Kombination von Schwellwerten das Vorhandensein oder die Abwesenheit des weiteren Symbole bestimmt.

2. Verfahren zum Gewinnen von Kartenkoordinaten nach Anspruch 1, weiterhin **dadurch gekennzeichnet, daß** jede der Linienpixelsignaturen, Bereichspixelsignaturen und Bitpixelsignaturen zur Bestimmung des Vorhandenseins oder der Abwesenheit von Symbolen benutzt wird und mindestens ein Symbol durch Verwendung einer Kombination von mindestens zwei unterschiedlichen Arten von Pixelsignaturen bestimmt wird.

3. Verfahren zum Gewinnen von Kartenkoordinaten nach Anspruch 1 oder Anspruch 2, weiterhin **dadurch gekennzeichnet, daß** der vorbestimmte Meßpunkt anfänglich auf ein eine erste Ecke des maschinenlesbaren Bildes definierendes Pixel eingestellt wird und nach Abtasten eines auf der Anfangseinstellung beruhenden Erkennungsfensters Koordinaten des Meßpunkts um ein einzelnes Pixel in einer Richtung bewegt werden, eine Gültigkeitsprüfung an diesem Meßpunkt ausgeführt wird und wenn sich der Meßpunkt an einem gültigen Pixel befindet, Abtastung vom neuen Meßpunkt aus ausgeführt wird.

4. Verfahren zum Gewinnen von Kartenkoordinaten nach Anspruch 3, weiterhin **dadurch gekennzeichnet, daß** jedes Mal, wenn ein Symbol identifiziert wird, eine Ausschließungezone definierende Koordinaten gespeichert werden, wobei diese Ausschließungszone einen vorbestimmten Bereich darstellt, der von dem Symbol belegt ist und in dem sich kein anderes Symbol befinden darf, wobei jede derartige Ausschließungszone einen Bereich darstellt, in dem ein Meßpunkt nicht zur Lokalisierung eines weiteren Symbols dienen wird.

5. Verfahren zum Gewinnen von Kartenkoordinaten nach Anspruch 4, weiterhin **dadurch gekennzeichnet, daß** bei Erhöhen der Koordinaten des vorbestimmten Meßpunkts der Meßpunkt um die Länge der Ausschließungszone in Erhöhungsrichtung aktualisiert wird, wenn festgestellt wird, daß sich der neue Meßpunkt in einem ausgeschlossenen Bereich befindet.

6. Verfahren zum Gewinnen von Kartenkoordinaten nach Anspruch 3, 4 oder 5, weiterhin **dadurch gekennzeichnet, daß** nach jeder Aktualisierung der Meßpunktkoordinaten eine Bestimmung der Anzahl von Pixeln getroffen wird, die zwischen dem gegenwärtigen Meßpunkt und einem Rand der Karte in der Erhöhungsrichtung verbleiben und wenn die verbleibende Anzahl von Pixel weniger als die kleinste Dimension des in dieser Richtung verbleibenden Erkennungsfensters ist, der Meßpunkt als ungültig bestimmt wird.

7. Verfahren zum Gewinnen von Kartenkoordinaten nach Anspruch 6, weiterhin **dadurch gekennzeichnet, daß** bei Bestimmung, daß der Meßpunkt aufgrund der Erkennungsfenstergröße ungültig ist, die erste Koordinate des Meßpunkts rückgesetzt wird, um den anfänglichen Ausgangsrand der Karte zu definieren und die andere Koordinate um ein Pixel in der Richtung im rechten Winkel zur ersten Vorwärtsrichtung aktualisiert wird.

8. Verfahren zum Gewinnen von Kartenkoordinaten nach Anspruch 7, weiterhin **dadurch gekennzeichnet, daß** nach Erhöhen der Meßpunktkoordinaten eine Zählung der Anzahl von Pixeln getätigt wird, die zwischen der letzten aktualisierten Koordinate und einem Rand der Karte in der Erhöhungsrichtung verbleiben und die Anzahl verbleibender Pixel mit dem kleinsten Erkennungsfenster in dieser Richtung verglichen wird, um zu bestimmen, ob ein Symbol in dem verbleibenden Raum auf der Karte liegen könnte.

9. Verfahren zum Gewinnen von Kartenkoordinaten nach Anspruch 8, weiterhin **dadurch gekennzeichnet, daß** bei Bestimmung, daß keine weiteren Symbole in dem auf der Karte verbleibenden Bereich liegen können, das Verfahren zum Gewinnen von Kartenkoordinaten oder Symbolen als abgeschlossen bestimmt wird.

10. Verfahren zum Gewinnen von Kartenkoordinaten nach einem beliebigen vorhergehenden Anspruch, weiterhin **dadurch gekennzeichnet, daß** eine Bitpixelsignatur Koordinaten umfaßt, die vom Meßpunkt in X- und Y-Richtungen versetzt sind, wobei eine vorbestimmte Anzahl dieser Pixel an vorbestimmten Koordinaten untersucht wird und die Farbe dieser ausgewählten Pixel mit einer erwarteten Farbe solcher Pixel verglichen wird, wobei die Anzahl von Pixeln, bei denen festgestellt wird, daß sie in erwarteter und Position übereinstimmen, mit einem vorbestimmten Grenzwert verglichen wird, der das Vorhandensein oder die Abwesenheit eines Symbols bestimmt.

**11.** Verfahren zum Gewinnen von Kartenkoordinaten nach Anspruch 10, weiterhin **dadurch gekennzeichnet, daß** die in einer Pixelsignatur vorhandenen Pixel in eine Vielzahl von Mengen gruppiert werden, wobei jede Menge einen entsprechenden Schwellwert zum vergleichen aufweist, wobei das Symbol erkannt wird, wenn jeder oder eine vorbestimmte Anzahl von Schwellwerten überschritten wird.

**12.** Vorrichtung zum Gewinnen von Kartenkoordinaten mit Mitteln (5) zum Abtasten eines Bildes, Verarbeitungsmitteln (1) zum Untersuchen des abgetasteten Bildes und Speichermitteln (3) zum Speichern von gewonnenen Koordinaten, wobei das Verarbeitungsmittel das Verfahren eines beliebigen der Ansprüche 1 bis 11 benutzt.

**Revendications**

**1.** Procédé d'extraction de coordonnées de carte comprenant :

la détermination pour chacun d'une pluralité de symboles connus d'au moins une signature binaire de pixels respective ;
la génération d'une image lisible par ordinateur d'un plan comprenant de tels symboles ;
le balayage d'une fenêtre de reconnaissance à partir d'un point de test prédéterminé pour déterminer si la signature binaire de pixels dans ladite fenêtre correspond à une des signatures binaires de pixels représentant un symbole connu ; et
le stockage des données identifiant les coordonnées de carte et le type de symbole pour chaque correspondance de signature binaire de pixels ainsi trouvée **caractérisé en ce qu'**au moins un symbole est déterminé en comptant le nombre de pixels ayant une valeur particulière dans une zone comprenant au moins deux pixels dans une direction et au moins deux pixels dans une autre direction pour fournir une signature de pixel de zone, au moins un autre symbole est déterminé en comparant le nombre de pixels dans une ligne de direction prédéterminée à l'intérieur d'une fenêtre de reconnaissance pour fournir une signature de pixel de ligne dans laquelle le nombre de pixels d'une couleur spécifique sont comparés par rapport à un seuil prédéterminé pour déterminer si le symbole est présent et un autre symbole est déterminé en comptant un premier nombre de pixels ayant une valeur particulière dans une première zone comprenant au moins deux pixels dans une direction et au moins deux pixels dans une autre direction et si ledit premier nombre dépasse un seuil prédéterminé, un comptage est réalisé du nombre de pixels ayant une valeur particulière dans une seconde zone liée à ladite première zone pour déterminer un second nombre qui est comparé par rapport à un autre seuil prédéterminé, la combinaison de seuils déterminant la présence ou l'absence de l'autre symbole.

**2.** Procédé d'extraction de coordonnées de carte selon la revendication 1 **caractérisé en outre en ce que** chacune des signatures de pixels de ligne, des signatures de pixels de surface et des signatures binaires de pixels sont utilisées pour déterminer la présence ou l'absence des symboles et au moins un symbole est déterminé en utilisant une combinaison d'au moins deux types différents de signature de pixels.

**3.** Procédé d'extraction de coordonnées de carte selon la revendication 1 ou la revendication 2 **caractérisé en outre en ce que** le point de test prédéterminé est initialement établi à un pixel définissant un premier angle de l'image lisible par ordinateur et, après balayage d'une fenêtre de reconnaissance basée sur le réglage initial, des coordonnées d'un point de test sont déplacées d'un pixel unique dans une direction, un contrôle de validité est réalisé sur ledit point de test et, si ledit point de test est un pixel valide, un balayage est réalisé à partir du nouveau point de test.

**4.** Procédé d'extraction de coordonnées de carte selon la revendication 3, **caractérisé en outre en ce que** chaque fois qu'un symbole est identifié, des coordonnées définissant une zone d'exclusion sont stockées, ladite zone d'exclusion représentant une zone prédéterminée occupée par le symbole et dans laquelle aucun autre symbole ne peut résider, chacune de cette zone d'exclusion représentant une zone dans laquelle un point de test ne servira pas à situer un autre symbole.

**5.** Procédé d'extraction de coordonnées de carte selon la revendication 4 **caractérisé en outre en ce que** en incrémentant les coordonnées du point de test prédéterminé, si le nouveau point de test est trouvé résider dans une zone exclue, le point de test est mis à jour par la longueur de la zone d'exclusion dans la direction d'incrémentation.

6. Procédé d'extraction de coordonnées de carte selon la revendication 3, la revendication 4 ou la revendication 5 **caractérisé en outre en ce qu'**après chaque mise à jour des coordonnées de point de test, une détermination est faite du nombre de pixels restant entre le point de test actuel et un bord du plan dans la direction d'incrémentation et, si le nombre de pixels restant est inférieur à la plus petite dimension de la fenêtre de reconnaissance restant dans cette direction, le point de test est déterminé comme invalide.

7. Procédé d'extraction de coordonnées de carte selon la revendication 6 **caractérisé en outre en ce que** lors de la détermination que le point de test est invalide en raison de la taille de la fenêtre de reconnaissance, la première coordonnée du point de test est réinitialisée pour définir le bord de début initial du plan et l'autre coordonnée est mise à jour par un pixel dans une direction à angle droit par rapport à la première direction d'avance.

8. Procédé d'extraction de coordonnées de carte selon la revendication 7 **caractérisé en outre en ce que** après l'incrémentation des coordonnées de point de test, un comptage est effectué du nombre de pixels restant entre la dernière coordonnée mise à jour et un bord du plan dans la direction d'incrémentation et le nombre de pixels restants est comparé avec la plus petite fenêtre de reconnaissance dans cette direction pour déterminer si un symbole pourrait se trouver sur le plan dans l'espace restant.

9. Procédé d'extraction de coordonnées de carte selon la revendication 8 **caractérisé en outre en ce que**, lors de la détermination que d'autres symboles ne peuvent pas se trouver dans la zone restant dans le plan, le traitement d'extraction des coordonnées ou symboles de carte est déterminé comme terminé.

10. Procédé d'extraction de coordonnées de carte selon l'une quelconque des revendications précédentes, **caractérisé en outre en ce qu'**une signature binaire de pixels comprend un décalage de coordonnées à partir du point de test dans des directions x et y, un nombre prédéterminé de ces pixels à des coordonnées prédéterminées étant examinés et la couleur desdits pixels sélectionnés étant comparée avec une couleur attendue pour ces pixels, le seuillage du nombre de pixels trouvés correspondre en couleur et en position attendues avec une valeur prédéterminée déterminant la présence ou l'absence d'un symbole.

11. Procédé d'extraction de coordonnées de carte selon la revendication 10 **caractérisé en outre en ce que** les pixels présents dans une signature de pixels sont groupés dans une pluralité de jeux, chaque jeu ayant un seuil respectif pour la comparaison, le symbole étant déterminé si chacun ou un nombre prédéterminé de seuils est dépassé.

12. Appareil pour extraire des coordonnées de carte comprenant un moyen (5) pour balayer une image, un moyen de traitement (1) pour examiner l'image scannée et un moyen de stockage (3) pour stocker des coordonnées extraites, le moyen de traitement utilisant le procédé d'une quelconque des revendications 1 à 11.

101 — A0 or A1 or A3 Paper map or Plan containing plant symbols

↓

102 — A4 Paper copy

↓

103 — A4 Flatbed Image Scanner

**Fig 1**

↓

104 — 300 dpi Monochrome Image

**Fig 6**

5 — Scanner

1 — Processor

3 — Data Storage

4 — MMI

2 — VDU

**Fig 16**

Fig.2.

## Fig.3.

H

W

Test Point

41

42

43

Fig 4

**Fig 5**

START

Move to the top left corner of the scanned image - current position is (1,1) — 500

Test for a symbol using the set of point, line and area pixel signatures — 505

Has a symbol been found? — 510

Update the list of symbols found and update exclusion zones — 515

Have all symbol signatures been checked? — 520

Advance to the next valid pixel — 525

Valid pixel found? — 530

FINISH

START

700

Any symbol
Signatures left?

N → EXIT : FAILURE

Fig 7

Y

705

Any pixel point
signature left?

Y

710

Apply signature

N

715

Any pixel line
signature left?

Y

720

Apply signature

N

725

Any pixel area
signature left?

Y

730

Apply signature

N

735

Are relevant point,
line and area criteria met
for this symbol?

N

Y

740

Update list of
recognized symbols

EXIT : SUCCESS

**Fig 8a**

START

800 — Advance one position to the right, maintaining the current height

805 — Does the current position fall within an exclusion zone?

N

Y

810 — Advance along the horizontal by the width of the exclusion zone

815 — Is the horizontal distance between the current position and the image right edge > smallest recognition window width?

N

Y

825 — Move to the left edge of the image and then move down by one pixel

820 — Return the current position

8.1

Fig 8B

FINISH

From Fig 8A (8.1)

**Fig 8b**

830 — Does the current position fall within an exclusion zone?

N

Y

835 — Advance along the horizontal by the width of the exclusion zone

840 — Is the vertical distance between the current position and the bottom of the image > smallest recognition window height?

Y

N

845 — Return the current position

850 — Position is not valid

FINISH

Fig 9

Test Point (1,1)
X increases

Y

| X | Y | Expected | Outcome |
|---|---|---|---|
| 2 | 3 | 1 | 1 |
| 5 | 3 | 1 | 1 |
| 8 | 5 | 1 | 1 |
| 12 | 5 | 1 | 1 |
| 10 | 8 | 0 | 1 |
| 14 | 9 | 1 | 1 |
| 5 | 10 | 1 | 1 |

Fig 10

Test Point
1,1

110

| X1 | Y1 | X2 | Y2 | EW | EB | OW | OB |
|---|---|---|---|---|---|---|---|
| 1 | 1 | 16 | 16 | 0 | 16 | 0 | 16 |
| 3 | 8 | 10 | 1 | 0 | 8 | 2 | 6 |
| 12 | 2 | 12 | 16 | 1 | 14 | 5 | 10 |
| 1 | 12 | 16 | 12 | 1 | 15 | 5 | 11 |

130

Fig 11

120

Fig 13

Fig 12

EP 0 942 388 B1

Fig 14

24

Fig15